Europäisches Patentamt

European Patent Office

Office européen des brevets

(11) Publication number: **0 281 724 B1**

# EUROPEAN PATENT SPECIFICATION

(45) Date of publication of patent specification: **22.01.92**

(51) Int. Cl.⁵: **B29C 67/22**, B29D 9/00, //B29K105/04,B29L9/00, B29L31/58

(21) Application number: **88100023.6**

(22) Date of filing: **04.01.88**

(54) **Method and apparatus for moulding a layer of foamed plastic material on sheet material.**

(30) Priority: **13.01.87 IT 1906087**

(43) Date of publication of application:
**14.09.88 Bulletin 88/37**

(45) Publication of the grant of the patent:
**22.01.92 Bulletin 92/04**

(84) Designated Contracting States:
**DE FR GB IT**

(56) References cited:
**DE-B- 1 147 029**
**DE-B- 1 504 496**
**DE-B- 2 545 435**
**US-A- 3 431 331**
**US-A- 4 116 736**

(73) Proprietor: **TECNOS S.p.A.**
**Strada Vicinale Novella**
**I-20014 Nerviano (Milan)(IT)**

(72) Inventor: **Dragoni, Lorenzo**
**Via Oberdan 16**
**I-21047 Saronno(IT)**

(74) Representative: **Coloberti, Luigi**
**Via E. de Amicis No. 25**
**I-20123 Milano(IT)**

Rank Xerox (UK) Business Services

# Description

The present invention refers to a method for moulding a layer of foamed plastic material, in particular foamed polyurethane, on sheet material, for example cloth, plastic material and suchlike, as well as an apparatus comprising a suitable mould for the realization of the method. The invention is also directed to the product obtained with the use of the method claimed.

In the production, for example, of carpets or other similar accessories for use in the motor car sector, in particular carpeting used to coat the inside floor areas of motor vehicles, a preshaped carpet corresponding to the bottom shape or other part of the motor vehicle to be coated, is provided with a layer of foamed polyurethane material on the rear surface, not seen in the end product, designed to be adapted to said bottom surface or other part of the above-mentioned vehicle, in order to obtain an adequate mating.

In the production of carpets for the use mentioned, at present the preshaped sheet material is introduced upside down into the cavity of a mould, comprising a lower mould part and an upper mould part having complementary surfaces to define said mould cavity therebetween; then a metered quantity of a polyurethane mixture is fed into the mould cavity by injection and this is left to foam in the closed mould until it fills it and adheres completely to the sheet material underneath. Such a method of operating is rather laborious and complex, in particular when sheet materials of large dimensions have to be handled. As a consequence, the injection of polyurethane material in a closed mould is made possible only for a few simple models of carpet, also because of the difficulty in filling the cavity of the mould with a low density foam, which in its rising should expel the air, flowing along paths that are sometimes very long and intricate. In certain cases, therefore, one is obliged to use several mixing heads for the injection of the polyurethane mixture into one mould, with the negative consequence of obtaining polyurethane layers varying in density or with a density different from what is desired.

Pouring of the polyurethane mixture on the carpet in an open mould would obviate the above-mentioned problems of filling and density; nevertheless, also pouring into an open mould according to traditional techniques proves practically unrealizable, insofar as the upside down position of the carpet on the lower part of the mould, with the rear surface of the carpet convex and turned upwards, would not allow the liquid polyurethane mixture to be contained in the mould. Therefore it should be desiderable to support the carpet from the front side by the upper part of the mould. From DE-A-1.147.029 it is know to use vacuum to preshape a plastic sheet maintaining the vacuum during the closure of the mould to held up the preshaped plastic sheet during foaming; nevertheless the vacuum may be destroied by seeping of air from the outside. Therefore, according to conventional technique it is impossible to support large and heavy carpets or sheet materials by vacuum which does not allow to create uniformly distributed pneumatic forces or support carpets or sheet material having apertures.

The object of the present invention is to provide a method for the moulding a layer of foamed plastic material, on a carpet or preshaped sheet material, by means of which it is possible to support the sheet material adequately during the moulding operations, independently of the form and dimensions of the sheet itself, and also possible to pour the liquid mixture directly into the open mould or inject it into a closed mould in such a way as to ensure a homogeneous filling and an adequate density.

A further object of the invention is to provide a method, as defined above, in particular for the formation of soundproof carpets or similar articles for coating the inside floor of motor vehicles, in which it is possible to reduce or eliminate the formation of air bubbles, or through which the air bubbles tend to form in the interface of adhesion between the layer of foamed material and the preshaped sheet, thus remaining out of sight.

A further object of the invention is to provide an apparatus for carrying out the method mentioned above, which allows an easy positioning of a preshaped sheet material on an open part of the mould, an easy accessibility for cleaning operations on the mould itself, and the retention of said preshaped sheet without being negatively influenced by seeping of air from the outside.

These and other objects are obtained according to the invention, by means of the method of claim 1 and the apparatus according to claim 6.

The method and some examples of embodiments of an apparatus according to the invention, are illustrated here below with reference to the attached drawings, in which:

Fig.1 shows a first embodiment of an apparatus, in which the mould is shown open with the parts tilted and ready for the cleaning operations and the positioning of the preshaped sheet material.

Fig.2 shows the apparatus illustrated in the preceding figure, with the mould open in position for pouring or feeding the foamable material mixture into the cavity of the mould.

Fig.3 is a view of the same apparatus, in the closed condition.

Fig.4 shows a first possible variation of the apparatus shown in Fig.1.

Fig.5 shows the scheme of a second possible variation, of the apparatus and method according to the invention.

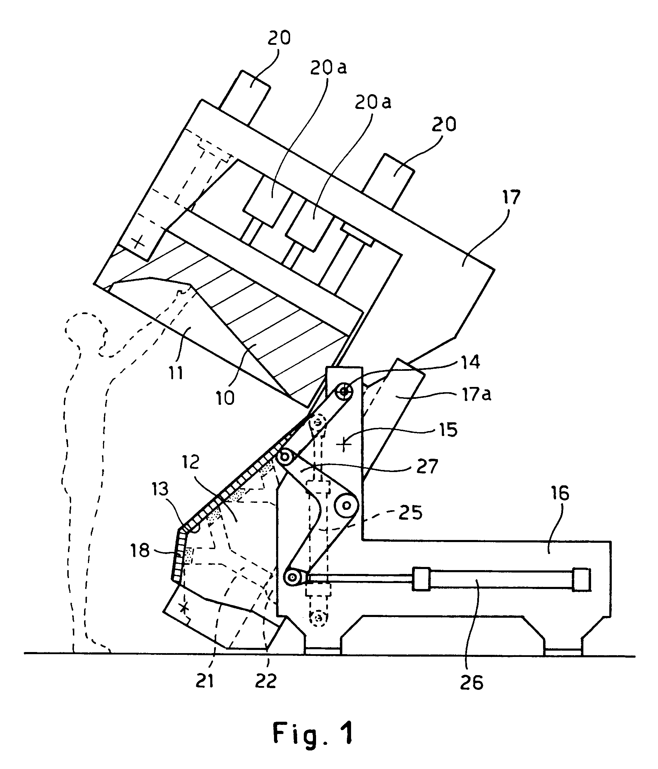

Fig.1 shows an apparatus according to the present invention, comprising a generic mould for the moulding of a layer of polyurethane material on the rear surface of a piece of sheet material, for example a preshaped carpet, designed to cover part of the inside of a motor vehicle, the front surface of which, that is the part that remains seen, may be "hairy" or permeable to air. As shown, the mould comprises a first mould part 10, or lower mould part, containing a cavity 11, and a second mould part 12, or upper mould part, having a surface 13 substantially complementary to the preceding cavity 11 of the mould. Both the mould parts 10 and 12 are rotatably or ti Itably supported around horizontal axes 14 and 15.

The apparatus according to this first example, comprises a base support structure 16 for the closure press of the mould. The press in its turn comprises a structure 17 designed to rest on the base structure 16 and connected to the latter in such a way that it is rotatable round the axis 15; the lower mould part 10 is carried by the press structure 17 in a sliding way along guides 20a and its movement is controlled by means of hydraulic cylinders 20 or other suitable control means, the movement being between a retracted position against a support plane of the structure 17 and an advanced position in the operative condition of Fig.1, which allows easy access to an operator for cleaning the cavity 11 of the mould. The press also comprises a closure element 17a to which the upper mould part 12 is attached; the closure element 17a in its turn is rotatable, in relation to the press structure 17, around axis 14, in such a way as to allow the two parts 17 and 17a of the press to rotate independently.

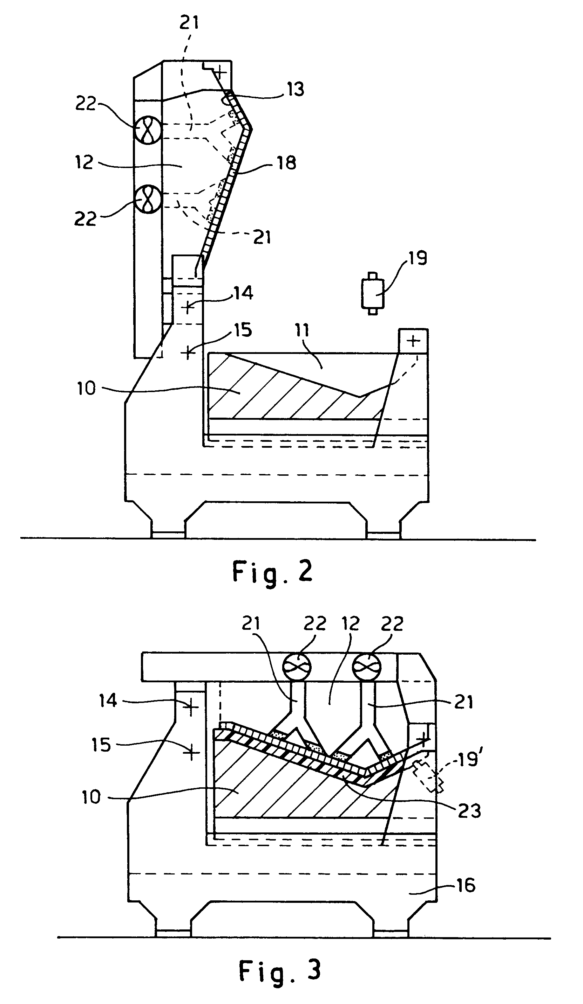

Therefore the apparatus can assume either the operative position of Fig.1 , with the two mould parts open, which allows the usual cleaning operations and the positioning of the sheet material 18, as is clarified further on, or the operative position of Fig.2, with the mould parts 10 and 12 open in condition for the pouring or feeding of a polyurethane foam into the cavity 11, by means of a movable mixing head 19, carried for example by a supporting arm (not shown), as well as the closure position of the mould, as shown in Fig.3.

The two parts 17 and 17a of the press with the mould, can be tilted or moved between the operative positions shown, or other work positions if desired, by any system of control devices, for example by means of hydraulic or pneumatic cylinders, mechanical control devices or by control means of some other type. In particular, in the example shown, the lower part 17 of the press is actuated to rotate by a cylinder 25, while the upper or closure part 17a is actuated to rotate by means of a second cylinder 26 and a system of articulated levers 27.

In the operative condition of Figure 1, the support structure 17 of the press is tilted upwards and backwards from the base structure 16; on the contrary, the closure part 17a of the press is rotated by about 90° in such a way that the upper mould part 12 in the operative position shown, is low down with its surface 13 or part of it, substantially turned upwards or towards the operator. This operative condition facilitates the operation of placing or positioning the preshaped sheet material or carpet 18 on the surface 13. The positioning of the carpet 18 is carried out in such a way that the hairy part of its front surface, designed to remain seen, is turned towards the surface 13 of the mould and therefore remains in contact with it. Since the carpet 18, both in the position of Fig.1 and in the positions shown in the other figures, would tend to fall and detach itself from the surface 13 of the mould, if not suitably held in position, according to the present invention pneumatic means for holding and supporting the carpet 18 have been provided; these make use of a strong peripheral air suction current, which is maintained continuously between the surface 13 of the mould and the front surface of the carpet 18. Apropos of this, the mould part 12 has been provided with internal channels 21, which communicate, at one end, with air fans 22 or air suction devices. The air suction devices 22 can be positioned in the mould or on the support structure 17a of the mould part 12 or placed elsewhere and connected by means of flexible tubes to the internal channels 21 of the mould in such a way as to allow a rotation or tilting of the mould itself. At the other end, the channels 21 open on the shaped surface 13 of the mould 12 by means of one or more air suction apertures, provided in a suitable position on the surface 13 in order to support the sheet material 18 or make it adhere, in several points, suitably spaced out on the above mentioned surface 13, according to the dimensions and the shape of the carpet to be manufactured. The continuous air suction by means of the air fan 22 will naturally have to be such as to create a sufficient support force for the sheet 18, by calculating an air delivery which takes into account both the tranversal flow of air that may tend to pass across the material 18, and the longitudinal flow of air created between the sheet 18 and the surface 13 starting from the peripheral edge. The action of the longitudinal air flow, perhaps combined with the action of the transversal air flow, creates a pneumatic action on the face of the material 18 turned towards the surface 13 of the mould, which maintains the sheet material 18 firmly adherent or against the surface 13 with a force sufficient to overcome the weight of the material itself and concentrated mainly in correspondence with the suction holes.

The dimensions of the channels 21 inside the mould and those of the openings through the said channels emerge on the surface 13 of the mould, will have to be calculated from time to time according to the shape, dimensions and weight of the sheet material 18, in order to obtain the necessary air delivery sufficient to provide the support force required; as a guide, the apertures through which the channels 21 open out onto the surface 13 of the mould, in any case must not be so large as to cause a partial penetration of the sheet into the apertures themselves, since this would cause an undesiderable defect in the product manufactured; therefore, in the case of suction apertures of a considerable width, it would be advisable to provide for the use of pads of porous material or perforated plates, provided with a considerable number of small passage holes for the air necessary to create the required pneumatic support force for the sheet, and capable also of contrasting the pressure of the polyurethane foam during foaming.

The use of the apparatus described with reference to the figures from 1 to 3, according to the method of this invention is as follows: starting from the operative conditions illustrated in Fig.1, the mould is completely open and tilted backwards so that the second mould part 12, which has to support the preshaped sheet, or carpet 18 pneumatically, presents the surface 13, or part of it, oriented upwards and towards the operator; in the meantime, the mould part 10 has been advanced and lowered towards the operator, who carries out all the necessary operations for cleaning the cavity 11 of the mould, which in this way is easily accessible because of the particular arrangement of the two parts. Once the preliminary mould-cleaning operations have been completed, the operator takes a sheet or carpet 18, already preshaped so as to be substantially identical to the surface 13 of the mould, and he places it with its front surface, that is the side destined to remain seen, on the surface 13 of the mould part 12 in such a way that the rear convex face of the carpet is turned upwards. The air fans 22 for the air suction system are started up, creating a strong suction and a pneumatic anchoring action on the carpet 18, concentrated particularly in correspondence with the suction points of the channels 21. The carpet 18 is thus held firmly against the surface 13 of the mould and therefore can be easily manipulated or moved with the corresponding part 12 of the mould.

Once the carpet 18 has been positioned and the suction system put into operation, the mould part 10 is retracted and the entire structure of the press 17, 17a with the mould open, is tilted into the operative condition of Fig.2, in which the first mould part 10 now has the cavity 11 turned upwards, while the mould part 12 is in an erect or vertical position, with the sheet material or carpet 18 always held firmly against the surface 13 by the continuous air suction action created by the fans 22. With the mould open and in this condition, it is now possible to pour or feed a certain quantity of a polyurethane mixture or other foamable plastic material into the cavity 11 of the mould part 10, for example by means of a mixing head 19 carried by a robotized arm (not shown) which distributes the mixture over the bottom of the cavity in the way desired.

Once the polyurethane mixture has been poured into the cavity of the mould, the mould is closed as shown in Fig.3, by lowering or rotating the upper mould part 12 forwards, always maintaining the air suction to hold the carpet 18 firmly against the surface 13 of the above-mentioned mould part. The polyurethane mixture can then foam freely and completely fill the cavity of the mould, thus adhering to the rear surface of the carpet or sheet material 18, which always remains firmly held pneumatically against the surface 13. The fact that the preshaped sheet 18 is kept in contact with the upper part of the mould during the foaming of the polyurethane foam facilitates the filling of the cavity of the mould and the formation of a layer 23 of foamed material without defects or air bubbles. Although it is preferable to maintain the air suction for the whole of the hardening or polymerization phase of the resin, nevertheless, if desired, the air suction could even be stopped before, when the foam has partially or completely filled the cavity of the mould, since the sheet or carpet 18 would be supported in any case by the pressure exerted by the foam.

Once the foam has completely hardened, the mould is opened again and brought back into the operative condition shown in Fig.1, and the air suction is now stopped, if it was not stopped previously; in this way, it is possible to remove the moulded article and proceed to a new cleaning and moulding operation, as described above.

It is evident that the method can be realized with any type of mould and with the mould parts tiltable in any position, provided that the position is suitable to allow the loading of the sheet material 18 and the unloading of the finished article, without departing from the principle of supporting the sheet 18 pneumatically by means of air suction through the surface 13 of the mould part 12 destined to come into contact with the external face of the sheet 18, the other side being the one with the formation of the foamed layer 23. For example, as illustrated in Fig.3, the polyurethane foam or other suitable foamable material, could be fed into the mould by injection also with the mould closed, by means of a head 19', always supporting the sheet material 18 pneumatically so that it does not form bulges or hang into the inside of the cavity of the mould during the foaming phase.

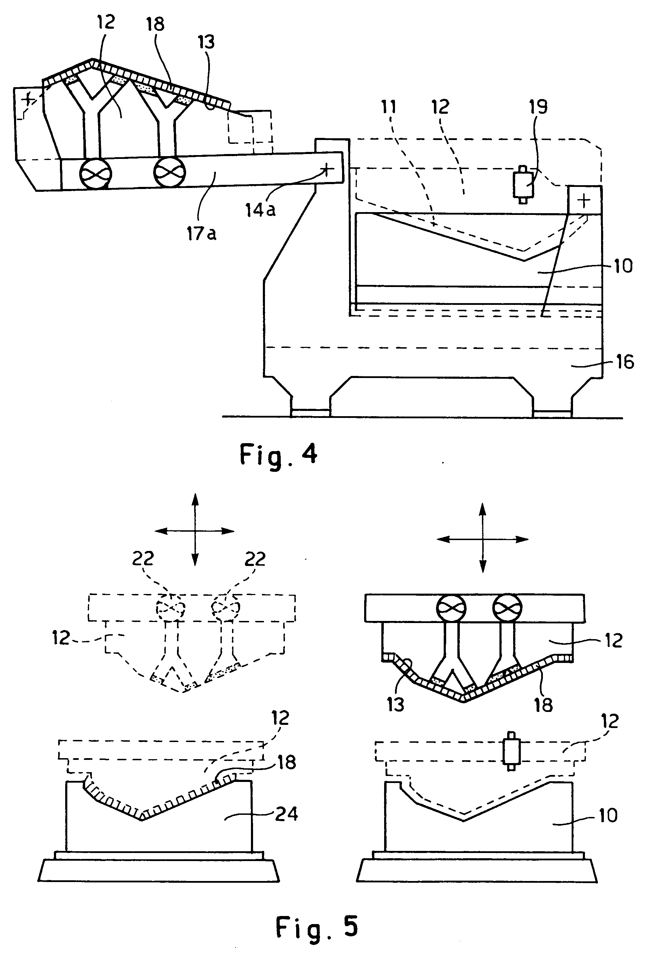

Fig.4 shows another possible solution for the apparatus described previously. In the case of Fig.4, unlike the previous case, now the mould part 10 can remain fixed in a horizontal position and the mould part 12, destined to support the sheet material 18, can rotate to an angle of 180° round a single axis 14a in order to present the surface 13 oriented upwards, or in a position such as to allow the placing of the sheet material 18 on it. Nevertheless, the mould shown in Fig.4 presents the same characteristics and functions in the same way as the mould described previously. Alternatively, both the mould parts 10 and 12 carried by the respective structures 17 and 17a of the press, could rotate round the common rotation axis 14a, thus assuming corresponding operative positions.

The scheme illustrated in Fig.5 shows a further possible solution, without departing from the innovative principles of the invention. In the case of Fig.5, the mould part 10 remains fixed in a lower position, while the mould part 12 is supported by means of an usual control system (not shown), which makes it possible to move the mould horizontally and vertically into four different operative positions, as shown in the drawing itself. In this case, the mould part 12, which has to support the preshaped sheet 18, presents its surface 13 oriented downwards.

Therefore an auxiliary jig 24 on one side of the mould part 10, has been used ; this presents a cavity that is complementary to the one in mould part 12 and on this the sheet 18 is initially positioned, this time with the part destined to remain seen and to come into contact with the surface 13, turned upwards. Therefore, in the operational sequence shown, the upper mould part 12 is moved to a position above the jig 24, on which a preshaped sheet 18 has already been placed, then it is lowered against the jig 24 with the air fans 22 in action so as to pick up the sheet 18 pneumatically, then it is moved upwards again and towards the right, stopping in a position above and in line with the mould 10. In the meantime, a metered quantity of a foamable mixture has been poured or fed into the cavity of the mould 10, then the upper mould part 12 is lowered and closed against the lower mould part 10, while the air suction is maintained until the foam has completely filled the cavity of the mould, as in the cases explained previously.

**Claims**

1. A method for moulding a layer of foamed plastic material on one side of a preshaped sheet of material (18) while maintaining the other side free of foamed plastic material (23) in a mould having upper (12) and lower (10) mould parts, movable relative to one another so as to form a mould cavity (11) therebetween, comprising the steps of placing the preshaped sheet of material with the other side against the upper mould in (12), in the open condition, holding the same sheet (18) pneumatically against the upper mould (12), feeding a metered quantity of foamable plastic material (23) into the lower mould (10), characterized by directly connecting at least one air suction source (22) to apertures in concentrated areas on a surface of the upper mould part (12) through a set of conduits (21) defined through said upper mould part; and supporting the preshaped sheet material (18) during closure of the mould (10, 12) and for at least part of the time necessary for the plastic material (18) to foam by maintaining a continuous air suction within the mould cavity through said apertures and between said sheet of the material and said upper mould surface.

2. A method as claimed in claim 1, characterized by maintaining the air suction until the cavity (11) of the mould is completely filled up with the foamed plastic material.

3. A method as claimed in claim 1, characterized by maintaining the air suction for at least part of the time necessary for the filling of the cavity (11) of the mould and the polymerization of the foamed plastic material in the mould.

4. A method as claimed in claim 1, in which the mould comprises a lower mould part (10) and an upper mould part (12) which is tiltable in an open condition of the mould, in such a way that the upper mould part (12) presents at least part of an air suction surface (13) upwardly oriented characterized by laying of a preshaped sheet material (18) on the above-mentioned air suction surface (13), and turning the open mould (10, 12) until the lower mould part (10) is positioned with the cavity turned upwards, holding the sheet material (18) against the air suction surface (13) of the upper mould part (12), and by the fact that a metered quantity of foamable plastic material is fed into the cavity (11) of the mould, after which the mould (10, 12) is closed in order to allow the foaming of the plastic material.

5. A method as claimed in claim 1, in particular for the moulding of carpeting for coating the inside of motor vehicles, in which said sheet material (18) comprises a carpet, having a front face permeable to air, characterized by the fact of making the said carpet (18) adhere to said air suction surface (13) of the upper mould part (12), with said front face of the carpet (18) oriented towards said suction surface (13) of the mould.

6. An apparatus for moulding a foamed plastic material (23) on one side of a preshaped sheet of material (18), the apparatus comprising a support structure (16) for a mould having a lower mould part (10) and an upper mould part (12) movable relative to one another and defining a mould cavity (11) therebetween, said upper mould part (12) having a surface (13) complementary to the moulding cavity (11) of the lower mould part (10), said upper mould part (12) comprising support means for supporting the sheet material (18) against corresponding complementary surface (13) characterized in that said support means comprising air suction channels (21) defined in the upper mould part (12), said air suction channels being connected to air suction devices (22) and to apertures to continuously suck air within the mould cavity through openings in selected areas of said complementary surface of the upper mould part (12).

7. An apparatus as claimed in claim 6, characterized by the fact that the said upper mould part (12) comprising the air suction means (21, 22), is supported rotatably in relation to the lower mould part (10).

8. An apparatus as claimed in claim 6, characterized by the fact that the said upper mould part (12) comprising the air suction means (21, 22), is rotatably supported in relation to the lower mould part (10), moving between a closed condition and an open condition of the mould, and by the fact that both the parts (10, 12) of the mould, in the open position, can rotate to a third operative position in which at least part of the air suction surface (13) of said upper mould part (12) is upwardly oriented.

9. An apparatus as claimed in claim 6, characterized by the fact of comprising a fixed support structure (16) for a press, comprising a first support frame (17) for the lower mould part (10) and a second support frame (17a) for the upper mould part (12), rotatable in relation to the preceding one, the said first and second frames (17, 17a) of the press being further rotatable on the fixed support structure (16), and comprising control means (26) operable for making the said second frame (17a) of the press rotate between a closed condition and an open condition of the mould, as well as control means (25) for making the said first and second frames (17, 17a) of the press rotate contemporaneously, in the open condition of the mould, between a first position in which the lower mould part (10) is horizontal with its open cavity oriented upwards, and a second position in which the air suction surface (13) of the upper mould part (12) is partially oriented upwards.

10. An apparatus as claimed in claim 9, characterized by the fact that the said second support frame (17a) for the upper mould part (12), is hinged rotatably to the said first support frame (17) for the lower mould part (10).

11. An apparatus as claimed in claim 9, characterized by the fact that the said lower mould part (10) is movable between a retracted position towards the first frame (17) of the press, and an advanced position, and by the fact that guide means (20a) and control means (20) are provided for moving the said lower mould part (10) between the above-mentioned retracted and advanced positions.

12. An apparatus as claimed in claim 6, in which the mould comprises a lower mould part (10) having an upward-oriented cavity (11), and an upper mould part (12) having a downward-oriented air suction surface (13), characterized by the fact that the said upper mould part (12) is movable horizontally between a position directly above the lower mould part (10) and a lateral position directly above a support jig (24) for the preshaped sheet material (18), the said upper mould part (12) being movable also between a raised position and a lowered position, in which it picks up the preshaped sheet material (18) pneumatically from the support jig (24), and respectively between a raised position and a second lowered position in which it closes on to the lower mould part (10), control means being provided for moving the said upper mould part (12) between the above-mentioned operative positions.

**Revendications**

1. Procédé pour mouler une couche de matière plastique expansée sur une face d'une feuille de matière préformée (18) tout en maintenant l'autre face exempte de matière plastique expansée (23) dans un moule ayant des parties supérieure (12) et inférieure (10) de moule, mobiles l'une par rapport à l'autre de façon à former entre elles une empreinte (11) de moule, comprenant les étapes des mise en place de la feuille de matière préformée avec l'autre face contre la partie supérieure (12) du moule ouverte, le maintien de ladite feuille (18) par un moyen pneumatique contre la partie supérieure (12) du moule, l'introduction d'une quantité dosée de matière plastique expansible (13) dans la partie inférieure (10) du moule, caractérisé par la liaison directe entre au moins une source (22) d'aspiration d'air et des orifices concentrés dans des zones d'une surface de la partie supérieure (12) du moule par l'intermédiaire d'un ensemble de conduits (21) réalisés à travers ladite partie supérieure du moule; et le soutien de la matière en feuille préformée (18) pendant la fermeture du moule (10, 12) et pendant au moins une partie de temps nécessaire pour l'expansion de la matière plastique (18) en entretenant une aspiration d'air continue dans l'empreinte du moule à travers lesdits orifices et entre ladite feuille de matière et ladite surface de la partie supérieure du moule.

2. Procédé selon la revendication 1, caractérisé par l'entretien de l'aspiration d'air jusqu'à ce que l'empreinte (11) du moule soit entièrement remplie avec la matière plastique expansée.

3. Procédé selon la revendication 1, caractérisé par l'entretien de l'aspiration d'air pendant au moins une partie du temps nécessaire pour le remplissage de l'empreinte (11) du moule et la polymérisation de la matière plastique expansée dans le moule.

4. Procédé selon la revendication 1, dans lequel le moule comprend une partie inférieure (10) de moule et une partie supérieure (12) de moule qui peut basculer en position ouverte du moule, de telle manière que la partie supérieure (12) du moule présente au moins une partie d'une surface (13) d'aspiration d'air orientée vers le haut, caractérisé par la pose d'une matière en feuille préformée (18) sur la surface (13) d'aspiration d'air précitée, et la rotation du moule (10, 12) ouvert jusqu'à ce que la partie inférieure (10) du moule soit placée avec l'empreinte orientée vers le haut, le maintien de la matière en feuille (18) contre la surface (13) d'aspiration d'air de la partie supérieure (12) du moule, et en ce qu'une quantité dosée de matière plastique expansible est introduite dans l'empreinte (11) du moule, après quoi le moule (10, 12) est fermé pour permettre l'expansion de la matière plastique.

5. Procédé selon la revendication 1, en particulier pour mouler des tapis servant à couvrir l'intérieur de véhicules à moteur, dans lequel ladite matière en feuille (18) constitue un tapis ayant une face antérieure perméable à l'air, caractérisé en ce qu'on fait adhérer ledit tapis (18) à ladite surface (13) d'aspiration d'air de la partie supérieure (12) du moule, ladite face antérieure du tapis (18) étant orientée vers ladite surface d'aspiration (13) du moule.

6. Appareil pour mouler une matière plastique expansée (23) sur une face d'une matière en feuille préformée (18), l'appareil comprenant une structure de support (16) pour un moule ayant une partie inférieure (10) de moule et une partie supérieure (12) de moule mobiles l'une par rapport à l'autre et définissant entre elles une empreinte (11) de moule, ladite partie supérieure (12) du moule ayant une surface (13) complémentaire de l'empreinte de moulage (11) de la partie inférieure (10) du moule, ladite partie supérieure (12) du moule comportant un moyen de support pour supporter la matière en feuille (18) contre la surface complémentaire correspondante, caractérisé en ce que ledit moyen de support comprend des conduits (21) d'aspiration d'air réalisés dans la partie supérieure (12) du moule, lesdits conduits d'aspiration d'air étant reliés à des dispositifs (22) d'aspiration d'air et à des orifices pour aspirer d'une façon continue de l'air dans l'empreinte du moule via des orifices situés dans des zones déterminées de ladite surface complémentaire de la partie supérieure (12) du moule.

7. Appareil selon la revendication 6, caractérisé en ce que ladite partie supérieure (12) du moule comprenant les moyens (21, 22) d'aspiration d'air est supportée de façon à pouvoir tourner par rapport à la partie inférieure (10) du moule.

8. Appareil selon la revendication 6, caractérisé en ce que ladite partie supérieure (12) du moule comprenant les moyens (21, 22) d'aspiration d'air est supportée de façon à pouvoir tourner par rapport à la partie inférieure (10) du moule, en se déplaçant entre une position fermée et une position ouverte du moule, et en ce que les deux parties (10, 12) du moule ouvert peuvent tourner jusque dans une troisième position de fonctionnement dans laquelle au moins une partie de la surface (13) d'aspiration d'air de ladite partie supérieure (12) du moule est orientée vers le haut.

**9.** Appareil selon la revendication 6, caractérisé en ce qu'il comporte une structure fixe (16) de support pour une presse, comprenant un premier bâti de support (17) pour la partie inférieure (10) du moule et un second bâti de support (17a) pour la partie supérieure (12) du moule, pouvant tourner par rapport au précédent, lesdits premier et second bâtis (17, 17a) de la presse pouvant en outre tourner sur la structure fixe (16) de support, et comprenant un moyen de commande (26) servant à faire tourner ledit second bâti (17a) de la presse entre une position fermée et une position ouverte du moule, ainsi qu'un moyen de commande (25) pour faire simultanément tourner les premier et second bâtis (17, 17a) de la presse, le moule étant ouvert, entre une première position dans laquelle la partie inférieure (10) du moule est horizontale avec son empreinte ouverte orientée vers le haut, et une seconde position dans laquelle la surface (13) d'aspiration d'air de la partie supérieure (12) du moule est partiellement orientée vers le haut.

**10.** Appareil selon la revendication 9, caractérisé en ce que ledit second bâti de support (17a) pour la partie supérieure (12) du moule est articulé pour pourvoir tourner par rapport audit premier bâti de support (17) pour la partie inférieure (10) du moule.

**11.** Appareil selon la revendication 9, caractérisé en ce que ladite partie inférieure (10) du moule est mobile entre une position de retrait vers le premier bâti (17) de la presse et une position de sortie, et en ce qu'un moyen de guidage (20a) et un moyen de commande (20) sont prévus pour déplacer ladite partie inférieure (10) du moule entre lesdites positions en retrait et avancée.

**12.** Appareil selon la revendication 6, dans lequel le moule comporte une partie inférieure (10) de moule ayant une empreinte (11) orientée vers le haut, et une partie supérieure (12) de moule ayant une surface (13) d'aspiration d'air orientée vers le bas, caractérisé en ce que ladite partie supérieure (12) du moule peut être déplacée horizontalement entre une position située juste au-dessus de la partie inférieure (10) du moule et une position latérale située juste au-dessus d'un montage de support (24) pour la matière en feuille préformée (18), ladite partie supérieure (12) du moule pouvant également être déplacée entre une position haute et une position basse, dans laquelle elle saisit d'une façon pneumatique la matière en feuille préformée (18) sur le montage de support (24), et respectivement entre une position haute et une seconde position basse dans laquelle elle se referme sur la partie inférieure (10) du moule, un moyen de commande étant prévu pour déplacer ladite partie supérieure (12) du moule entre les positions de fonctionnement précitées.

**Patentansprüche**

**1.** Verfahren zum Anformen einer Schicht aus Schaumkunststoff an eine Seite eines vorgeformten Folienmaterials (18), während die andere Seite freigehalten wird von Schaumkunststoff (23) in einer Hohlform mit oberen (12) und unteren (10) Formhälften, die so zueinander beweglich sind, daß sie einen Hohlraum (11) zwischeneinander bilden, mit den Schritten:

Aufbringen des vorgeformten Folienmaterials mit der anderen Seite auf die obere Formhälfte in geöffnetem Zustand, wobei dieselbe Folie (18) pneumatisch gegen die obere Formhälfte (12) gedrückt wird, Einführen einer abgemessenen Menge von schäumbarem Kunststoffmaterial (23) in die untere Formhälfte (10), **gekennzeichnet durch**

den direkten Anschluß von mindestens einer Luftabsaugeinrichtung (22) an Öffnungen in konzentrierten Bereichen auf einer Oberfläche der oberen Formhälfte (12) durch einen Satz Leitungen (21), der durch die obere Formhälfte (12) verläuft; und

das Halten des vorgeformten Folienmaterials (18) während die Hohlform (10, 12) geschlossen wird und für zumindest einen Teil der Zeit, die notwendig ist, um das Kunststoffmaterial (18) durch kontinuierliches Absaugen von Luft aus dem Hohlraum durch die Öffnungen und zwischen der Folie und der Oberfläche der oberen Formhälfte aufzuschäumen.

**2.** Verfahren nach Anspruch 1, **gekennzeichnet durch** das kontinuierliche Absaugen von Luft bis der Hohlraum (11) der Hohlform vollständig mit dem geschäumten Kunststoffmaterial gefüllt ist.

**3.** Verfahren nach Anspruch 1, **gekennzeichnet durch** das kontinuierliche Absaugen von Luft für zumindest einen Teil der Zeit, die notwendig ist, um den Hohlraum (11) der Hohlform zu füllen und das geschäumte Kunststoffmaterial in der Hohlform zu polymerisieren.

**4.** Verfahren nach Anspruch 1, bei dem die Hohlform aus einer unteren Formhälfte (10) und einer oberen Formhälfte (12) besteht, die in einem geöffneten Zustand der Hohlform so schwenkbar ist, daß die obere Formhälfte (12) mindestens einen Teil einer Luftansaugfläche (13) nach oben gerichtet darstellt, **gekennzeichnet durch** das Auflegen eines vorgeformten Folienmaterials (18) auf die Luftsaugfläche (13) und durch das Drehen der geöffneten Hohlform (10, 12) bis die untere Formhälfte (10) so liegt, daß der Hohlraum nach oben zeigt während das Folienmaterial (18) gegen die Luftansaugfläche (13) der oberen Formhälfte (12) gehalten wird, sowie durch die Tatsache, daß eine bestimmte Menge von schäumbarem Kunststoffmaterial in den Hohlraum (11) der Hohlform eingeleitet wird, wonach die Hohlform (10, 12) geschlossen wird, um das Schäumen des Kunststoffmaterials zu ermöglichen.

5. Verfahren nach Anspruch 1, insbesondere für das Formen von Teppichware zur Auskleidung von Motorfahrzeugen, wobei das Folienmaterial (18) einen Teppichüberzug mit luftdurchlässiger Vorderseite aufweist, **gekennzeichnet durch** die Tatsache, daß der Teppichüberzug (18) von der Luftansaugfläche (13) der oberen Formhälfte (12) so angesogen wird, daß die Vorderseite des Teppichüberzugs (18) auf die Ansaugfläche (13) der Hohlform zeigt.

6. Vorrichtung zum Anformen eines geschäumten Kunststoffmaterials (23) an eine Seite eines vorgeformten Folienmaterials (18), mit einer Haltestruktur (16) für eine Hohlform mit einer unteren Formhälfte (10) und einer oberen Formhälfte (12), die gegeneinander beweglich sind und einen Hohlraum (11) zwischen sich bilden, wobei die obere Formhälfte (12) eine Oberfläche (13) aufweist, die komplementär zum Hohlraum (11) der unteren Formhälfte (10) ist, und die obere Formhälfte (12) Haltemittel zum Halten des Folienmaterials (18) gegen die entsprechende komplementäre Oberfläche (13) aufweist, **dadurch gekennzeichnet, daß** die Haltemittel Luftansaugkänale (21) aufweisen, die durch die obere Formhälfte (12) verlaufen, wobei die Luftansaugkanäle mit Luftansaugvorrichtungen (22) sowie mit Öffnungen verbunden sind, um kontinuierlich Luft aus dem Hohlraum durch Öffnungen in bestimmten Bereichen der komplementären Oberfläche der oberen Formhälfte (12) abzusaugen.

7. Vorrichtung nach Anspruch 6, **gekennzeichnet durch** die Tatsache, daß die obere Formhälfte (12), die die Luftansaugmittel (21, 22) aufweist, drehbar zur unteren Formhälfte (10) gehalten wird.

8. Vorrichtung nach Anspruch 6, **gekennzeichnet durch** die Tatsache, daß die obere Formhälfte (12), die die Luftansaugmittel (21, 22) aufweist, drehbar zur unteren Formhälfte (10) gehalten wird und sich zwischen einer geöffneten und einer geschlossenen Stellung der Hohlform bewegt, und durch die Tatsache, daß beide Hälften (10, 12) der Form sich im geöffneten Zustand in eine dritte Betriebsposition drehen können, in der zumindest ein Teil der Luftansaugfläche (13) der oberen Formhälfte (12) nach oben gerichtet ist.

9. Vorrichtung nach Anspruch 6, **dadurch gekennzeichnet, daß** sie eine feste Halterungsstruktur (16) für eine Presse aufweist mit einem ersten Haltegestell (17) für die untere Formhälfte (10) und einem zweiten Haltegestell (17a) für die obere Formhälfte (12), welches zum vorhergehenden drehbar ist, wobei das erste und zweite Gestell (17, 17a) der Presse außerdem um die feste Halterungsstruktur (16) drehbar sind und Steuerungsmittel (26) aufweisen, die bewirken, daß das zweite Gestell (17a) der Presse sich zwischen einer geöffneten und geschlossenen Stellung der Hohlform dreht, sowie Steuerungsmittel (25), die bewirken, daß das erste und zweite Gestell (17, 17a) der Presse sich bei geöffneter Stellung der Hohlform gleichzeitig drehen, und zwar zwischen einer ersten Stellung, in der die untere Formhälfte (10) horizontal mit dem geöffneten Hohlraum nach oben zeigt, und einer zweiten Stellung, in der die Luftansaugefläche (13) der oberen Formhälfte (12) teilweise nach oben gerichtet ist.

10. Vorrichtung nach Anspruch 9, **dadurch gekennzeichnet, daß** das zweite Haltegestell für die obere Formhälfte (12) drehbar zum ersten Haltegestell (17) für die untere Formhälfte (10) gelagert ist.

11. Vorrichtung nach Anspruch 9, **dadurch gekennzeichnet, daß** die untere Formhälfte (10) zwischen einer eingezogenen und einer ausgefahrenen Position zum ersten Gestell (17) der Presse beweglich ist, und daß Führungsmittel (20a) und Steuerungsmittel (20) vorgesehen sind, um die untere Formhälfte (10) zwischen der eingezogenen und der ausgefahrenen Position zu bewegen.

12. Vorrichtung nach Anspruch 6, in der die Hohlform eine untere Formhälfte (10) mit einem nach oben gerichteten Hohlraum (11) und eine obere Formhälfte (12) mit einer nach unten gerichteten Ansaugefläche (13) aufweist, **da-**

**durch gekennzeichnet,** daß die obere Formhälfte (12) horizontal zwischen einer Position direkt oberhalb der unteren Formhälfte (10) und einer seitlichen Position direkt oberhalb einer Haltevorrichtung (24) für das vorgeformte Folienmaterial (18) beweglich ist, wobei die obere Formhälfte (12) außerdem zwischen einer angehobenen und einer abgesenkten Stellung bewegbar ist, in der sie das vorgeformte Folienmaterial (18) pneumatisch von der Stützvorrichtung (24) aufnimmt, und andererseits zwischen einer angehobenen Stellung und einer zweiten abgesenkten Stellung, in der sie sich zur unteren Formhälfte (10) hin schließt, wobei Steuerungsmittel vorgesehen sind, um die obere Formhälfte (12) zwischen den oben genannten Betriebspositionen zu bewegen.

Fig. 1

Fig. 2

Fig. 3

Fig. 4

Fig. 5